# EUROPEAN PATENT APPLICATION

(11) **EP 1 378 496 A2**
(43) Date of publication of application: **07.01.2004**
(21) Application number: 03007938.8
(22) Date of filing: 08.04.2003
(51) Int. Cl.: C03C 14/00, C03C 4/12, C03C 23/00, B23K 26/00, C03C 10/16, C03C 25/62

(54) **Locally crystallized glass**

(30) Priority: 03.07.2002 JP 2002194115; 30.09.2002 JP 2002334540; 19.11.2002 JP 2002334540
(71) Applicant: Nihon Yamamura Glass Co. Ltd., Nishinomiya-shi, Hyogo 662-8586 (JP)
(72) Inventor: Hashima, Hidekazu, Nihon Yamamura Glass Co. Ltd., Nishinomiya-shi, Hyogo 662-8586 (JP); Konishi, Akio, Nihon Yamamura Glass Co. Ltd., Nishinomiya-shi, Hyogo 662-8586 (JP); Tanigami, Yoshinori, Nihon Yamamura Glass Co. Ltd., Nishinomiya-shi, Hyogo 662-8586 (JP); Kawamoto, Yoji, Kobe-shi, Hyogo 655-0854 (JP); Tokura, Noriko, Marugame-shi, Kagawa 763-0071 (JP)
(74) Representative: Reinhard - Skuhra - Weise & Partner

(57) **Abstract**

Glasses containing one or more rare-earth elements and one or more halides are disclosed including a region locally transformed into crystallized glass that comprises precipitated rare-earth element-containing halide crystals. Also disclosed are molded objects containing dispersed particles of glass containing one or more rare-earth elements and one or more halides and having a region within which the particles are transformed into crystallized glass particles. The crystallized region is invisible under usual light but can be detected using upconversion luminescence generated by irradiation with excitation laser light having a specific wavelength. Disclosed further are methods for preparing such locally crystallized glasses and molded objects comprising irradiating with laser light the substrate, as well as methods for efficient detection of the crystallized region in such glasses or molded objects comprising irradiating the glass substrate or the molded object with laser light to generate upconversion luminescence in the rare-earth element-containing halide crystals.

## Description

### FIELD OF THE INVENTION

The present invention relates to a method for creating, locally in an intended position in a glass substrate or other molded objects, crystallized glass comprising precipitated rare-earth element-containing halide crystals; to glasses or other molded objects in which crystallized glass is locally created by causing precipitation of rare-earth element-containing halide crystals; and to a method for making such glasses or other formed objects; as well as to a method for detection of a region where such crystals are precipitated, in glasses or other molded objects.

### BACKGROUND OF THE INVENTION

It is known, concerning crystallized glasses comprising precipitated rare-earth element-containing halides, that it is possible to generate upconversion luminescence by irradiation, with light having the longer wavelengths such as 800 nm, 980 nm, etc., of rare-earth ions-containing fluoride crystals precipitated by a heat-treatment of glasses containing rare-earth elements and fluorides. In Journal of Materials Science 33: 63(1998), it is described that upconversion luminescence was generated with high efficiency at about 550 nm and about 660 nm by irradiation, with 800 nm-light, of transparent crystallized glasses in which β-PbF₂:Er³⁺ crystals had been precipitated by a heat-treatment at the first crystallization temperature of glasses containing rare-earth elements and halides and having a composition of 50 SiO₂ - 50 PbF₂- x ErF₃ (x = 3, 4 and 5). In Journal of Ceramic Society of Japan, 107, 1175 (1999), it is described that upconversion luminescence was generated with high efficiency at about 550 nm and about 660 nm by irradiation, with 802 nm-light, of rare-earth ions-containing fluoride crystals that had been precipitated by a heat-treatment of glasses containing rare-earth elements and fluorides having a composition based on SiO₂-Al₂O₃-PbF₂-CdF₂-LnF₃ (Ln = La, Ce, Pr, Nd, Sm, Eu, Gd, Tb, Dy, Ho, Er, Tm, Yb or Lu).

In Japanese Patent Application Publication H7-69673, transparent glass-ceramic compositions and a method of their production are described, in which rare-earth ions-containing fluoride crystals were selectively precipitated by a heat-treatment of rare-earth element and fluorides-containing glasses having a composition based on SiO₂-AlO_{1.5}-GaO_{1.5}-PbF₂-CdF₂-GeO₂-TiO₂-ZrO₂-ReF₃ or -ReO_{1.5} (Re=Er, Tm, Ho, Yb, Pr, etc.), and also described is that luminescence having a wavelength of 550 nm or 660 nm and the like, was generated by irradiation of the compositions with 980-nm light.

Due to a heat-treatment, crystallized glasses obtainable by those conventional methods are those in which crystallization occurs in their entirety. While crystallized glasses comprising precipitated rare-earth element-containing halide crystals may be used as materials for making full-color displays, infrared sensors, short-wavelength solid-state lasers or the like, there will be cases, depending on intended purposes of use, where such glasses are desired that, instead of their entirely, only some particular regions of them are crystallized, e.g., a glass whose surface is crystallized only in a limited region, a glass having in its interior a thin layer of crystallized glass, and the like. Moreover, if it becomes possible to turn an intended region of molded objects of various materials into a region capable of generating upconversion luminescence, that would widen the possibility of their development for a variety of applications, such as displays and the like.

### SUMMARY OF THE INVENTION

On the above-mentioned background, the objectives of the present invention include to provide a method for creating crystallized glass, in a particular region of glass substrates or other molded objects, comprising precipitated rare-earth element-containing halide crystals as well as to provide crystallized glasses or other molded objects made by the method.

Using glass substrates containing one or more rare-earth elements and one or more halides, the present inventors found that laser light is capable of instantaneously causing crystallization of the glass at the site of irradiation, and that a variety of figures such as dots, lines, planes, three-dimensional figures, patterns and the like can be freely inscribed by creating crystallized glass by means of the manipulation, as desired, of the ON/OFF or the scanning pattern of the laser light, or of the depth of the focus in the case where laser light is converged, in the glass substrates containing one or more rare-earth elements and halides, or in a variety of molded objects containing dispersed particles of such glass.

Thus, the present invention provides a method for creating, locally in a glass substrate, crystallized glass comprising precipitated rare-earth element-containing halide crystals, which method comprises providing a glass substrate containing one or more rare-earth elements and halides, and irradiating the glass substrate with laser light. In the method, the laser light is irradiated preferably when the glass substrate is heated at a temperature that is lower than its first crystallization temperature. More preferably, irradiation is performed in such a manner that one or more regions of the glass substrate defined as dots, lines, planes and/or three-dimensional figures are irradiated to create crystallized glass in the regions.

The present invention further provides one or more rare-earth element and halide-containing glass, in which crystallized glass is created comprising precipitated one or more rare-earth elements and one or more halides, in one or more regions of the glass substrate defined as dots, lines, planes and/or three-dimensional figures.

The present invention still further provides a method for producing particles consisting of crystallized glass comprising precipitated rare-earth element-containing halide crystals, which method comprises providing a molded object containing dispersed glass particles containing one or more rare-earth elements and one or more halides, and irradiating the molded object with laser light. Preferably, the laser light is irradiated in such a manner that that one or more regions of the molded object defined as dots, lines, planes and/or three-dimensional figures are irradiated to produce particles consisting of crystallized glass in the regions of the molded object.

The present invention still further provides a molded objects containing dispersed glass particles containing one or more rare-earth elements and one or more halides, wherein crystallized glass comprising precipitated rare-earth element-containing halide crystals are created in the glass particles that are present in one or more regions of the molded object defined as dots, lines, planes, and/or three-dimensional figures.

The invention as defined above provides glasses in which crystallized glass comprising precipitated rare-earth-containing halides is created in an intended region in an intended form, as well as molded objects in which particles of such crystallized glass are created in an intended region in an intended form.

Besides, it was found as a result of the above invention, that in the glass substrate irradiated with laser light to create a locally crystallized region (e.g., dots with diameter of 200 µm) on or beneath its surface, the surface of the glass substrate is deformed, though only slightly, in the region, e.g. mildly raised, and thus created surface irregularity, or minimal local fluctuation in the thickness of the glass substrate, would sometimes allow the crystallized regions to be visually identified depending on viewing angles, as well as allowing the crystallized regions and shape of them to be microscopically observed using, e.g. a differential interference microscope. As the locally crystallized glass is intended to be a glass that displays figures such as dots, lines, etc. in a glass substrate when upconversion luminescence is generated, it is preferable that the information recorded with crystallized glass in the glass substrate is usually protected from being visually identified, either with unaided eyes or with a microscope, and only allows visual identification with upconversion luminescence generated by irradiation with excitation laser light.

Thus, another objective of the present invention is to provide a locally crystallized glass, in which crystallization has been induced locally on or beneath the surface of the glass substrate containing one or more rare-earth elements and one or more halides, whose crystallized region is substantially invisible under usual light, either with unaided eyes or with a microscope, and which allows to identify the crystallized region only when upconversion luminescence is generated by irradiation with excitation laser light. In the specification, the phrase "beneath the surface" means to be at a position so close to the surface of a glass substrate that crystallization occurring there could influence the profile (e.g., smoothness) of the surface.

The present inventors found that this objective is fulfilled when such a slightly raised surface of the glass substrate caused by local crystallization on or beneath the surface (e.g. regions defined as dots, lines, planes and/or three-dimensional figures) is coated with a coating film (coating layer) having a refractive index whose modulus difference from the refractive index of the glass substrate is small enough and which transmits both excitation laser light and upconversion luminescence.

Thus, the present invention further provides a coated, locally crystallized glass, comprising; a glass substrate containing one or more rare-earth elements and one or more halides and including, on or beneath its surface, locally created crystallized glass comprising precipitated rare-earth element-containing halide crystals; and a coating film covering the surface of the glass substrate, which coating film has a refractive index whose modulus difference is not more than 0.5 from the refractive index of the glass substrate with light having the wavelength of 632.8 nm.

The present invention further provides a coated, locally crystallized glass, comprising; a glass substrate containing one or more rare-earth elements and one or more halides and including, on or beneath its surface, locally created crystallized glass comprising precipitated rare-earth element-containing halide crystals; a coating layer covering the surface of the glass substrate, which coating layer has a refractive index whose modulus difference is not more than 0.5 from the refractive index of the glass substrate with light having the wavelength of 632.8 nm; and a transparent plate covering and tightly adhered to the coating layer.

The present invention further provides a method for producing a coated, locally crystallized glass, comprising coating the surface of a glass substrate containing one or more rare-earth elements and one or more halides and including, on or beneath its surface, locally created crystallized glass comprising precipitated rare-earth element-containing halide crystals, with a coating film of a material having a refractive index whose modulus difference is not more than 0.5 from the refractive index of the glass substrate with light having the wavelength of 632.8 nm.

The present invention further provides a method for producing a coated, locally crystallized glass, comprising covering the surface of a glass substrate containing one or more rare-earth elements and one or more halides and including, on or beneath its surface, locally created crystallized glass comprising precipitated rare-earth element-containing halide crystals, with a coating layer of a material having a refractive index whose modulus difference is not more than 0.5 from the refractive index of the glass substrate with light having the wavelength of 632.8 nm and a transparent plate over the coating layer.

By application of the coating film (or coating layer), the invention provides a locally crystallized glass, whose crystallized region is substantially invisible under usual light, either with unaided eyes or with a microscope, even if the surface of the glass substrate is slightly raised in that region, and which allows identification of the crystallized region only when upconversion luminescence is generated by irradiation with excitation laser light. Especially, according to the invention in which a glass substrate is covered with a coating layer and a transparent plate, the aimed invisibility of the crystallized region under usual light can be achieved in quite a simple process.

In an above-produced glass or molded object including a region of crystallized glass, the region which contains precipitated rare-earth element-containing halide crystals within the glass substrate or molded object can be identified using upconversion luminescence generated by irradiation of the rare-earth element-containing halide crystals with excitation laser light.

Thus, the present invention provides a method for identification of a region containing precipitated rare-earth element-containing halide crystals within a glass substrate comprising glass containing one or more rare-earth elements and one or more halides and including locally precipitated rare-earth element-containing halide crystals, or within a molded object comprising dispersed glass particles which contain one or more rare-earth elements and one or more halides and in some of which particles, locally within the molded object, rare-earth element-containing halide crystals are precipitated, wherein the method comprises irradiating the glass substrate or the molded object with excitation laser light to generate upconversion luminescence in the rare-earth element-containing halide crystals.

In order to generate upconversion luminescence with intensity that allows clear detection, excitation light with sufficient intensity is required. Thus, laser light must be employed as excitation light. With a beam of laser light having a dot-like cross section of a very narrow width, however, upconversion luminescence generated at a time is also limited to a region covered by such a narrow width. Therefore, it was found difficult to detect, at a time with upconversion luminescence, such a region of crystallized glass, e.g. one representing a letter using a plurality of dots that expands beyond a beam width or to correctly locate and detect a crystallized region, with excitation laser light, which is present locally in a glass substrate or molded object, since such a region, which is small and transparent, is invisible.

Upon the background, still another objective of the present invention is to provide a method for detection and identification of figures or letters, e.g., dots, lines, planes or three-dimensional figures, patterns, which has been inscribed in a glass or other molded object by locally creating crystallized glass comprising rare-earth element-containing halide crystals, and in particular, a method for quick and efficient detection and identification of such figures or letters, and inter alia, a method for instantaneous detection and identification of such figures or letters.

The present inventors found that, by irradiating a glass substrate, or molded object, including locally created crystallized glass, at a time or in a split second in a predetermined manner, with excitation laser light directed to a wider region than the original beam width of the laser light from its source, it is possible to detect, at one stroke, the figures or letters inscribed with crystallized glass in the glass substrate of molded object.

Thus, the present invention further provides the above-mentioned method for detection of figures or letters inscribed with crystallized glass in a glass substrate or molded object, wherein the method comprises expanding the beam width of the excitation laser light, and irradiating the glass substrate or molded object with the laser light.

The invention comprising expanding the beam width of the excitation laser light further provides the above-mentioned method for detection of figures or letters inscribed with crystallized glass in a glass substrate or molded object, wherein the method comprises irradiating the glass substrate or molded object with excitation laser light having a linear cross section by scanning the glass substrate or molded object with the laser light in a perpendicular or oblique direction relative to the longitudinal direction of the cross section.

The present invention further provides the above-mentioned method for detection of figures or letters inscribed with crystallized glass in a glass substrate or molded object, wherein the method comprises irradiating the glass substrate or molded object with excitation laser light having a dot-like cross section by scanning the glass substrate or molded object with the laser light in a first direction and simultaneously also in another direction perpendicular or oblique relative to the first direction.

According to the above-mentioned invention comprising expanding the width of the excitation laser light or utilization of scanning, microscopic figures and letters inscribed by means of local crystallization in a glass substrate or molded object can be clearly detected and identified using upconversion luminescence generated by irradiation with excitation laser light with sufficient intensity. Moreover, irradiation of a wide region, with excitation laser light at a time or in a split second in a predetermined manner, allows to identify locally inscribed figures or letters at one stroke in their entirety, as well as to readily detect and identify a microscopic crystallized region present in a glass substrate or molded object.

### BRIEF DESCRIPTION OF THE FIGURES

Figure 1 illustrates an example of inscribed figures in a plate-form glass substrate.
Figure 2 illustrates an example of an inscribed pattern in a fiber-form glass substrate.
Figure 3 is a schematic illustration of inscribed figures in a plate-form molded object containing dispersed glass particles.
Figure 4 is a schematic illustration of an inscribed pattern in a fiber-form molded object containing dispersed glass particles.
Figure 5 illustrates an example of inscribed figures in a plate-form glass substrate.
Figure 6 illustrates an example of an inscribed pattern in a fiber-form glass substrate.
Figure 7 is a schematical illustration of inscribed figures in a plate-form molded object containing dispersed glass particles.
Figure 8 is a schematical illustration of an inscribed pattern in a fiber-form molded object containing dispersed glass particles.
Figure 9 is an enlarged partial view of a molded object containing dispersed glass particle.
Figure 10 is an enlarged view of a point at which laser light was irradiated.
Figure 11 is a schematical illustration of a method for creating crystallized glass in an internal region of a glass substrate.
Figure 12 is a schematical illustration of a method for creating crystallized glass in an internal region of a glass substrate.
Figure 13 is a schematical illustration of irradiation with laser light having its beam width expanded through a lens.
Figure 14 shows inscribed letters in a glass plate which are detected using luminescence.
Figure 15 is a schematical illustration of irradiation by scanning with laser light having a linear cross section.
Figure 16 is a schematical illustration of irradiation by scanning with laser light having a dot-like cross section.

### DETAILED DESCRIPTION OF THE INVENTION

The present invention relates:
(1) a method for creating, in a glass substrate, crystallized glass comprising precipitated rare-earth element-containing halide crystals, wherein the method comprises irradiating with laser light a glass substrate containing one or more rare-earth elements and one or more halides,
(2) a method for creating, in a glass substrate, crystallized glass comprising precipitated rare-earth element-containing halide crystals, wherein the method comprises heating a glass substrate containing one or more rare-earth elements and one or more halides at a temperature that is lower than the first crystallization temperature of the glass substrate, and irradiating the glass substrate with laser light,
(3) the method described in (1) or (2) above, wherein irradiation with laser light is performed at one or more regions defined as dots, lines, planes and/or three-dimensional figures in the glass substrate to create crystallized glass in the regions,
(4) the method described in one of (1) to (3) above, wherein one or more dots, lines, planes, two-dimensional figures and/or three-dimensional figures which are defined by the regions are inscribed in the glass substrate by creating crystallized glass in the regions,
(5) the method described in one of (1) to (4) above, wherein the laser light is carbon dioxide laser light, titanium-sapphire laser light, YAG laser light, argon laser light, semiconductor laser light or dye laser light,
(6) a glass prepared according to the method (3) or (5) above, wherein crystallized glass comprising precipitated rare-earth element-containing halide crystals is created in one or more regions defined as dots, lines, planes and/or three-dimensional figures in the glass substrate,
(7) a glass prepared according to the method (4) or (5) above, wherein one or more dots, lines, planes, two-dimensional figures and/or three-dimensional figures which are defined by the regions are inscribed in the glass substrate by creation of crystallized glass in the regions,
(8) a glass containing one or more rare-earth elements and one or more halides, wherein crystallized glass comprising precipitated rare-earth element-containing halide crystals is created, in the glass substrate, in one or more regions defined as dots, lines, planes and/or three-dimensional figures,
(9) a glass containing one or more rare-earth elements and one or more halides, wherein one or more dots, lines, planes, two-dimensional figures and/or three-dimensional figures are inscribed in the glass substrate by creation of crystallized glass comprising rare-earth element-containing halide crystals in one or more regions defined as dots, lines, planes and/or three-dimensional figures in the glass substrate,
(10) a method for creating, in a molded object, particles comprising crystallized glass comprising precipitated rare-earth element-containing halide crystals, by irradiating with laser light the molded object which contains dispersed glass particles containing one or more rare-earth elements and one or more halides,
(11) the method described in (10) above, wherein the molded object is irradiated with the laser light in one or more regions thereof defined as dots, lines, planes and/or three-dimensional figures to create the particles comprising crystallized glass in the regions,
(12) the method described in (10) or (11) above, wherein one or more dots, lines, planes, two-dimensional figures and/or three-dimensional figures which are defined by the regions are inscribed in the molded object by creation of particles comprising crystallized glass in the regions,
(13) the method described in one of the method described in (10) to (12) above, wherein the laser light is carbon dioxide laser light, titanium-sapphire laser light, YAG laser light, argon laser light, semiconductor laser light or dye laser light,
(14) the method described in one of (10) to (13) above, wherein the molded object is a fiber, film or a coating film,
(15) the method described in one of (10) to (14) above, wherein the molded object comprises as the continuous phase thereof at least one material selected from the group consisting of organic polymer, inorganic polymer, glass and a composite thereof,
(16) a molded object prepared according to the method described in (11) or (13) above, wherein glass particles comprising crystallized glass comprising precipitated rare-earth element-containing halide crystals are created in the molded object in one or more regions thereof defined as dots, lines, planes and/or three-dimensional figures,
(17) the molded object prepared by the method described in (12) or (13) above, wherein one or more dots, lines, planes, two-dimensional figures and/or three-dimensional figures are inscribed in the molded object by creating particles comprising crystallized glass comprising rare-earth element-containing halide crystals in one or more regions defined as dots, lines, planes and/or three-dimensional figures in the glass substrate,
(18) a molded object containing dispersed glass particles containing one or more rare-earth elements and one or more halides, wherein crystallized glass comprising precipitated rare-earth element-containing halide crystals is created in the glass particles present in one or more regions thereof defined as dots, lines, planes and/or three-dimensional figures in the molded object,
(19) a molded object containing dispersed glass particles containing one or more rare-earth elements and one or more halides, wherein one or more dots, lines, planes, two-dimensional figures and/or three-dimensional figures are inscribed in the molded object by creation of crystallized glass comprising precipitated rare-earth element-containing halide crystals in one or more regions thereof defined as dots, lines, planes and/or three-dimensional figures,
(20) the molded object described above in one of (16) to (19) above, wherein the molded object is a fiber, film or a coating film,
(21) a coated, locally crystallized glass comprising; a glass substrate containing one or more rare-earth elements and one or more halides and including, on or beneath the surface thereof, locally created crystallized glass comprising precipitated rare-earth element-containing halides; and a coating film covering the surface of the glass substrate, which coating film has a refractive index whose modulus difference is not more than 0.5 from the refractive index of the glass substrate with light having the wavelength of 632.8 nm,
(22) a coated, locally crystallized glass, comprising; a glass substrate containing one or more rare-earth elements and one or more halides and including, on or beneath its surface, locally created crystallized glass comprising precipitated rare-earth element-containing halide crystals; a coating layer covering the surface of the glass substrate, which coating layer has a refractive index whose modulus difference is not more than 0.5 from the refractive index of the glass substrate with light having the wavelength of 632.8 nm; and a transparent plate covering and tightly adhered to the coating layer,
(23) the coated, locally crystallized glass described in (21) or (22) above, wherein the coating film or the coating layer is made of an inorganic material, an organic material or an organic-inorganic composite material,
(24) a method for producing a coated, locally crystallized glass, comprising coating the surface of a glass substrate containing one or more rare-earth elements and one or more halides and including, on or beneath its surface, locally created crystallized glass comprising precipitated rare-earth element-containing halides, with a coating film of a material having a refractive index whose modulus difference is not more than 0.5 from the refractive index of the glass substrate with light having the wavelength of 632.8 nm,
(25) a method for producing a coated, locally crystallized glass, comprising covering the surface of a glass substrate containing one or more rare-earth elements and one or more halides and including, on or beneath its surface, locally created crystallized glass comprising precipitated rare-earth element-containing halides, with a coating layer of a material having a refractive index whose modulus difference is not more than 0.5 from the refractive index of the glass substrate with light having the wavelength of 632.8 nm and a transparent plate over the coating layer,
(26) the method described in (24) or (25) above, wherein the coating layer is made of an inorganic material, an organic material or an organic-inorganic composite material,
(27) a method for producing a coated, locally crystallized glass comprising irradiating with laser light a glass substrate containing one or more rare-earth elements and one or more halides to locally create, on or beneath the surface of the glass substrate, crystallized glass comprising precipitated rare-earth element-containing halide crystals, and then coating the surface of the glass substrate with a coating film of a material having a refractive index whose modulus difference from the refractive index of the glass substrate is not more than 0.5 with light having the wavelength of 632.8 nm,
(28) a method for producing a coated, locally crystallized glass comprising irradiating with laser light a glass substrate containing one or more rare-earth elements and one or more halide to locally create, on or beneath the surface of the glass substrate, crystallized glass comprising precipitated rare-earth element-containing halide crystals, and then coating the surface of the glass substrate with a coating film of a material having a refractive index whose modulus difference from the refractive index of the glass substrate is not more than 0.5 with light having the wavelength of 632.8 nm and a transparent plate on the coating layer,
(29) the method described in (27) or (28) above, wherein the coating film or coating layer is made of an inorganic material, an organic material or an organic-inorganic composite material,
(30) a method for identification of a region containing precipitated rare-earth element-containing halide crystals within a glass substrate comprising glass containing one or more rare-earth elements and one or more halides and including locally precipitated rare-earth element-containing halide crystals, or within a molded object comprising dispersed glass particles which contain one or more rare-earth elements and one or more halides and in some of which particles, locally within the molded object, rare-earth element-containing halide crystals are precipitated, wherein the method comprises irradiating the glass substrate or the molded object with excitation laser light to generate upconversion luminescence in the rare-earth element-containing halide crystals,
(31) the method described in (30) above, comprising expanding the beam width of the excitation laser light, and irradiating the glass substrate or molded object with the laser light,
(32) the method described in (30) above, comprising irradiating the glass substrate or molded object with excitation laser light having a linear cross section by scanning the glass substrate or molded object with the laser light in a perpendicular or oblique direction relative to the longitudinal direction of the cross section,
(33) the method described in (30) above, comprising irradiating the glass substrate or molded object with excitation laser light having a dot-like cross section by scanning the glass substrate or molded object with the laser light in a first direction and simultaneously also in another direction perpendicular or oblique relative to the first direction,
(34) the method described in one of (30) to (33) above, wherein the laser light is semiconductor laser light, titanium-sapphire laser light, or dye laser light, and
(35) the method described in one of (30) to (34) above, wherein the generated upconversion luminescence is detected with a CCD camera or a silver salt camera.

In the present invention, the term "rare-earth elements" means one or more lanthanoid elements selected from the group consisting of La, Ce, Pr, Nd, Pm, Sm, Eu, Gd, Tb, Dy, Ho, Er, Tm, Yb and Lu.

In the present invention, a region "defined as a dot" means a region confined to such an extent that the region is seen as being a dot with unaided eyes.

In the present invention, a region "defined as a line" means a region having a width that is narrow enough compared with its length to such an extent that the region is seen as being a linear or curved line with unaided eyes.

In the present invention, a region "defined as a plane" means a region having two-dimensional spatiality so observed with unaided eyes, regardless of the shape of its outline, and includes either planar or curved plane,

In the present invention, a region "defined as a three-dimensional figure" means a region observed with unaided eyes as having three-dimensional spatiality, and includes, e.g., a solid region representing a prism, a cone and the like, and a hollow region consisting solely of the surface of such a solid figures, as well as a region consisting solely of ridgelines of a polyhedron.

In the present invention, the terms "two-dimensional figure" and "three-dimensional figure" include not only geometrical figures but also any shape having two- or three-dimensional spatiality and may be letters, numbers, designs or the like.

In the present invention, any laser light may be used for creating crystallized glass, insofar as it is capable of thermally interacting with a glass substrate or glass particles to be irradiated, including carbon dioxide laser light, titanium-sapphire laser light, YAG laser light, argon laser light, a variety of semiconductor laser light or dye laser light or the like. In the case where oxyfluoride glass is employed, it is possible to selectively create crystallized glass on or beneath the surface using carbon dioxide laser light, for it is absorbed in the vicinity of the surface of the substrate glass or the glass particles-containing molded object, and by using titanium-sapphire laser light, YAG laser light, argon laser light, semiconductor laser light or dye laser light, it is possible to create crystallized glass on the surface as well as in an internal region of the substrate glass or glass particles-containing molded object.

The glass used in the present invention containing one or more rare-earth elements and one or more halides is preferably a glass in which a fluoride is contained as a halide, and more preferably it is a rare-earth element-containing oxyfluoride glass of the following composition.
SiO₂ ····· 20-70 mole%
AlO_{1.5} ····· 0-50 mole%
PbF₂ ····· 10-70 mole%
CdF₂ ····· 0-60 mole%
LnF₃ ····· not more than 10 mole%
(Herein, Ln is selected from Er, Gd, Nd, Ho, Tm and Yb.)

In the above composition, the content of LnF₃ is preferably 0 mole% < LnF₃ ≦10 mole%, more preferably 0.1-10 mole%, further more preferably 0.5-10 mole%, and still more preferably 1-5 mole%.

In the present invention, a glass containing one or more rare-earth elements and one or more halides may be made into any of intended forms such as a plate, flake, thin film, stick, block, fiber, etc. in accordance with intended application, and then irradiated with laser light to create crystallized glass at the site of irradiation. Likewise, a molded object containing dispersed glass particles containing one or more rare-earth elements and one or more halides may be made into any of intended forms such as a block, plate, fiber, sheet, film, coating film, etc. and then irradiated with laser light to induce crystallization in those dispersed glass particles that are present at the site of irradiation. A thin membrane-like glass, film, sheet and coating film, for example, may be of monolayer structure or of multilayer structure consisting of e.g., 2, 3 or more layers. A multilayer structure may be provided either by separately irradiating each of the component layers to induce crystallization and stacking them into an integrated structure, or by sequentially stacking each layer on the top of others and irradiating the layer with laser light to create crystallized glass. It is also possible to inscribe figures or the like by irradiating each of the layers with laser light that is sequentially focused in it to create crystallized glass there. In those cases, multicolored display can be provided by creating crystallized glasses that differ in the property of emission wavelength layer by layer, e.g., based on layer-by-layer modification of the formula regarding rare-earth elements in the glass particles contained. Bonding of those layers may be achieved with an inorganic polymer, an organic polymer or an organic-inorganic composite polymer (e.g. material mentioned below in connection with coating layers) or the like that is substantially transparent to crystallization laser light (where irradiation with crystallization laser light is performed after lamination is completed), to laser light for irradiation to generate upconversion luminescence in created crystals (excitation laser light), and to the emission of upconversion luminescence.

As to a molded object containing dispersed glass particles containing one or more rare-earth elements and one or more halides, the material of its continuous phase carrying the dispersed glass particles may be an organic polymer, an inorganic polymer, glass or a composite thereof. Examples of organic polymers include, but are not limited to, thermoplastic resins such as polyethylene, polypropylene, polystyrene, ABS, polyphenyleneoxide, polyethylene terephthalate, polybutylene terephthalate, polyethylene naphthalate, polybutylene naphthalate, polycarbonate, 6-nylon, 6,6-nylon, polyacrylate and polymethacrylate, thermosetting resins, UV curing polymers and the like. Examples of inorganic polymers include, but are not limited to, polyorganosiloxane, polyphosphazene and the like. For a glass substrate, any suitable glass may be used that is, e.g., free of rare-earth elements or halides.

According to the present invention, patterns or figures can be inscribed as desired that consist of dots, lines, planes or three-dimensional figures or their combinations, by creating crystallized glass in a glass containing one or more rare-earth elements and one or more halides or in a molded object containing dispersed particles of such a glass. In a molded object containing dispersed glass particles, such patterns or figures consisting of those dots, lines, planes, three-dimensional figures and any group of them or their combinations are inscribed with crystallized glass particles or groups of crystallized glass particles formed among dispersed, i.e. discrete, glass particles in the molded object.

By manipulating laser light, it is possible to limit the region within which crystallized glass is to be created to a particular portion of the glass substrate or the molded object containing glass particles (e.g., to the surface, to a particular region of the surface, to a particular internal region). It is also possible to make the entirety of the glass substrate or the molded object containing glass particles a region in which crystallized glass is formed. The dimensions of patterns or figures consisting of dots, lines, planes, three-dimensional figures, any group or combination of them inscribed in the glass substrate or molded object may be determined as desired by manipulating laser light. For example, the width of lines or the dimensions of figures may be varied continuously or discontinuously as desired.

Any known method for manipulation of laser light may be employed as desired, without need to be bound to any specific method. For example, methods may be employed such as exposure through a mask, scanning with laser light (in which either the laser light or the substrate or molded object may be moved), scanning with laser light with varying intensity, and so on. It is also possible to create crystallized glass in a region extending from a deeper site toward the surface of the substrate or molded object containing glass particles by irradiating them with laser light that is focused with a lens and shifting the focus, e.g., by continuously shifting the focus from a deeper site to the surface of the glass substrate or molded object. It is also possible to inscribe plural figures, at different depths from the surface, e.g., by scanning, in parallel with the surface of the substrate or molded object, with laser light focused at a deeper site of the substrate or molded object and then sifting the focus to a less deeper site and scanning the same area in the same direction. In a similar manner, it is also possible to inscribe three-dimensional figures in the glass substrate or molded object by irradiation with laser light with shifting focus in a three-dimensional manner. Focusing of laser light may be done with a lens. Alternatively, however, it may be done by simultaneously irradiating a target point with a plurality of narrowed down laser beam directed to the point.

The above spatial manipulation of the laser light may be achieved by manipulating the path of the laser light in the space, or, alternatively, by translating or turning the glass substrate or molded object irradiated with the laser light relative to the path of the laser light, or by a combination of the both methods.

It is beneficial to heat in advance the glass substrate containing one or more rare-earth elements and one or more halides at a temperature that is lower than its first crystallization temperature, for it adds to easiness of regulation of precipitation of halide crystals upon irradiation with laser light. Heating temperature is set preferably at or above the glass transition temperature and below the first crystallization temperature. More preferably, heating temperature is set near the glass transition temperature.

It is possible, utilizing upconversion luminescence generated in the crystallized glass, i.e., by emission of light having a shorter wavelength than that of excitation light, to display desired figures such as two-dimensional figures, three-dimensional figures, repeating patterns and the like consisting of one or more dots, lines, planes or three-dimensional figures according to the configuration of preformed crystallized glass-created regions in a glass or a molded object, by irradiating the glass or a molded object prepared by the present invention having one or more crystallized glass-created regions, with incidental (excitation) laser light having a specific wavelength of absorption known of each rare-earth element contained.

A coating film (coating layer), which covers the surface of a glass substrate having, on or beneath its surface, locally created crystallized glass comprising precipitated rare-earth element-containing halides, has a refractive index (n_{c}) whose modulus difference (|n_{c} - n_{G}|) is not more than 0.5 from the refractive index of the glass substrate (no) with light having the wavelength of 632.8 nm. This is because that difference in refractive index of 0.5 or lower from the glass substrate is sufficient to make the crystallized area in the glass substrate practically invisible. Where strict invisibility is required, the modulus difference in refractive index is preferably not more than 0.3, and more preferably not more than 0.2. "Refractive index" as referred to herein means what is determined as measured using light having the wavelength of 632.8 nm (available with He-Ne laser).

In the present specification, "coating" of the surface of a glass substrate includes not only to coat the glass substrate on the entire surface where crystallized glass is created, but also to coat the surface of the glass substrate on a partial area within which a crystallized glass-created portion is included.

Such a coating film as mentioned above may be made, as desired, of an inorganic material, organic material or organic-inorganic composite that are transparent and have refractive index within a certain range. Examples of inorganic materials include, but are not limited to, transparent materials that are glasses, e.g., metal oxide glasses and metal halide glasses, crystallized glasses, inorganic crystals (monocrystals, polycrystals) of metal oxides or metal halides, ceramics, glass-ceramics, organic groups-free polysiloxanes, and polysiloxanes containing metal oxide or metal halide, and the like. Examples of metal oxides and metal halides include TiO₂, SiO₂, Al₂O₃, ZrO₂, Ta₂O₅, PbO, PbF₂, CaF₂ and the like. For preparation of poly(organo)siloxanes, such materials may be used as: e.g., tetraalkoxysilanes (such as tetraethoxysilane, tetramethoxysilane), trialkoxysilanes (such as methyltriethoxysilane, methyltrimethoxysilane, phenyltrimethoxysilane, phenyltriethoxysilane), and dialkoxysilanes (such as dimethyldimethoxysilane, diethyldiethoxysilane, diphenyldimethoxysilane, diphenyldiethoxysilane). Examples of organic materials include, but are not limited to, acrylic resins, polycarbonate, polyester resins, styrene-based resins and epoxy resins. Examples of organic-inorganic composites include, but are not limited to, polysiloxanes carrying organic groups [polyorganosiloxane: -(SiR₁R₂O)ₙ-; R₁ and R₂ each denote an organic group or hydrogen, with the proviso that they do not simultaneously denote hydrogen], polyorganosiloxane copolymers obtained by copolymerization of an organosiloxane and an organic-groups free siloxane, and the like.

The coating films mentioned above may be formed by any suitable method that is applicable to a material employed, for example, any of desired methods such as PVD (physical vapor deposition), CVD (chemical vapor deposition), sol-gel process, lamination with a resin film, and drying, UV-curing or thermosetting of applied resin, and the like. Application of a sol, polymer liquid, liquid-state monomers or prepolymers may be done as desired by a known method such as dip coating, spin coating, spray coating and the like. For example, when poly(organo)siloxane prepared by the sol-gel process is employed as a coating film, it may be applied to the surface of a glass substrate, and allowed to solidify at ambient temperature or under warming conditions (e.g., 40 °C), and then allowed to further cure by heating at a suitable temperature (but at a temperature lower than the first crystallization temperature).

In the case where a transparent plate is provided, the coating layer interposed between the transparent plate and the glass substrate may be chosen from inorganic materials, organic materials or organic-inorganic composites that are transparent and have refractive index within a certain range. Examples of inorganic materials include, but are not limited to, organic groups-free polysiloxanes and polysiloxanes containing metal oxide or metal halide. Examples of organic materials include, but are not limited to, acrylic resins, polycarbonate, polyester resins, styrene-based resins, epoxy resins and the like. Examples of organic-inorganic composites include, but are not limited to, polysiloxanes carrying organic groups [polyorganosiloxane: -(SiR₁R₂O)ₙ-; R₁ and R₂ each denote an organic group or hydrogen, with the proviso that they do not simultaneously denote hydrogen], polyorganosiloxane copolymers obtained by copolymerization of an organosiloxane and an organic groups-free siloxane, and the like. The coating layer may be provided as an integrated part with the glass substrate and the transparent plate, e.g., either by applying to the surface of the glass substrate a starting sol, monomer, etc., then placing over it under pressure a transparent plate, and allowing a curing process to take place, or by placing over the surface of the glass substrate, under pressure, a transparent plate to which has been applied such sol or monomer on its lower surface, and allowing a curing process to take place. For example, where a poly(organo)siloxane or a metal oxide or metal halide-containing polysiloxane prepared by the sol-gel process is employed as a coating layer, they may first be solidified on the glass substrate at ambient temperature or under a warming condition (e.g. 40 °C), and then allowed to further cure by heating at a suitable temperature (but lower than the first crystallization temperature).

As the purpose of providing a transparent plate is that it allows to simplify the process of preparing an even coating layer, there is no substantial restriction as to the materials of the transparent plate, insofar as they are transparent. Therefore, a plate may be used as desired which is made of, e.g., any of a variety of glasses, organic polymers, organic-inorganic polymers and the like. Though the material of the transparent plate may be identical or similar to that of the coating layer, other materials may also be employed.

Excitation laser light may be used which has a specific wavelength of absorption known of each rare-earth element-containing halide crystals produced from the rare-earth elements and halides contained in the glass substrate, and chosen as desired from, e.g., semiconductor laser light, titanium-sapphire laser light or dye laser light and the like.

In the present invention, the expression, "expanding the beam width of the of laser light" with regard to excitation laser light includes cases where the beam width is gradually increased along the light path, and also where the beam width, after thus increased, is then fixed to give light with a constant width. It is also included that the cross sectional width of the beam is expanded in one direction alone, or that the beam is subjected to diffusion. Examples of methods for expanding the beam width of excitation laser light include methods consisting of directing laser light into a concave lens, a convex lens (causing expansion after convergence on the focus), a convex mirror or a concave mirror (causing expansion after convergence on the focus). By these method, a beam is provided that has gradually increasing cross sectional diameter. An object to be examined thus may be placed and irradiated in such a position relative to the beam that an adequate-sized irradiation spot if formed. It is also possible first to provide a beam with increasing width using a lens, a concave mirror or a convex mirror, and then, at a point where the beam width is expanded up to a certain amount, convert the beam to parallel light using a second lens, a concave mirror or a convex mirror, and direct the parallel light to the object to be examined. Cylindrical lenses (either convex or concave) or mirrors consisting of cylindrical surface (either convex or concave) allow to expand the cross sectional width of a beam in a single direction alone. Again, it is also possible to use a commercially available diffuser plate having a rough surface which functions to diffuse light [e.g., DFSQ1 mnfd. by SIGMA KOKI K.K. (made of synthetic quartz)], which is placed in front of the article to be examined, and to direct a usual laser beam with narrow width to the diffuser plate to irradiate the object to be examined with diffused light from the diffuser plate.

Using laser light having expanded width by one of those methods, it becomes possible to irradiate a wider range at the same time, allowing to detect figures or letters in their entirety.

In the present invention, in order to provide excitation laser light having a linear cross section, a narrow beam may be directed into, e.g., a proper Quonset hut-like cylindrical (convex) lens or a lens having a concave cylindrical surface, or the beam may be reflected on a mirror having a cylindrical surface (either concave or convex), to thereby expand the width of the beam in a single direction perpendicular to the axis of the cylinders. The beam width may be gradually increased along the beam or it may fixed utilizing a combination of cylindrical lenses or cylindrical mirrors. By directing laser light having a thus provided linear cross section to a galvano mirror in such a manner that the longitudinal direction of the cross section is oriented preferably parallel to the axis of oscillation of the galvano mirror, laser light may be obtained whose light path oscillates in the direction perpendicular to the linear cross section. By scanning a glass substrate or molded object containing crystallized glass with this light from the galvano mirror, it is possible to irradiate a wide region in a split second, allowing to detect the figures or letters at one stroke in their entirety as can be done by irradiation of an object to be examined with laser light having expanded beam diameter.

In order to achieve detection, at a stroke, of figures inscribed in a glass substrate or molded object by emission of upconversion luminescence generated by direct irradiation, with a narrow beam, of the glass substrate or molded object containing crystallized glass, the beam may be oscillated first in one direction using, e.g., a commercially available galvano mirror, and then directed to another galvano mirror which, in associated with the first galvano mirror, makes the beam oscillate in a direction perpendicular to the first one. With their cycle period and the amplitude being properly adjusted, an object to be examined may be thoroughly scanned on its entire surface or on an area of interest with thus obtained beam which oscillates within certain range rapidly in a first direction and relatively slowly in a direction perpendicular to the first direction. By this, a wide range may be irradiated almost at a time, allowing to detect the figures or letters in their entirety at one stroke. Polygon mirrors may also be used for scanning irradiation with the beam.

### EXAMPLES

The present invention will be described in further detail with reference to exemplary embodiments. However, it is not intended that the present invention be deemed as limited to those embodiments.

### [Examples 1-9]

Silica, alumina, lead fluoride, cadmium fluoride were used as glass raw materials, and erbium fluoride, gadolinium fluoride, neodymium fluoride, holmium fluoride, thulium fluoride and ytterbium fluoride for rare-earth elements. The materials were mixed to form each of the glass compositions indicated in Table 1 and melted in the atmosphere at 900 °C for 10 min in a platinum crucible. Molten glass was poured on a brass basal plate that was kept at about 200 °C, and allowed to cool slowly at the glass transition temperature. Each glass thus obtained was heated at 300 °C and then irradiated with carbon dioxide laser light having the wavelength of 10.6 µm (intensity 0.1 W) for 30 ms. After cooling, examination of the surface of each glass using an atomic force microscope revealed microscopic crystals of the size of several hundred nm that were localized within a circular area of 50 µm in diameter. Under irradiation with 800-nm infrared semiconductor laser light (500 mW), the glasses thus formed exhibited luminescence, at the position which had received carbon dioxide laser light, in a color indicated in Table 1 and having the size of 50 µm in diameter.

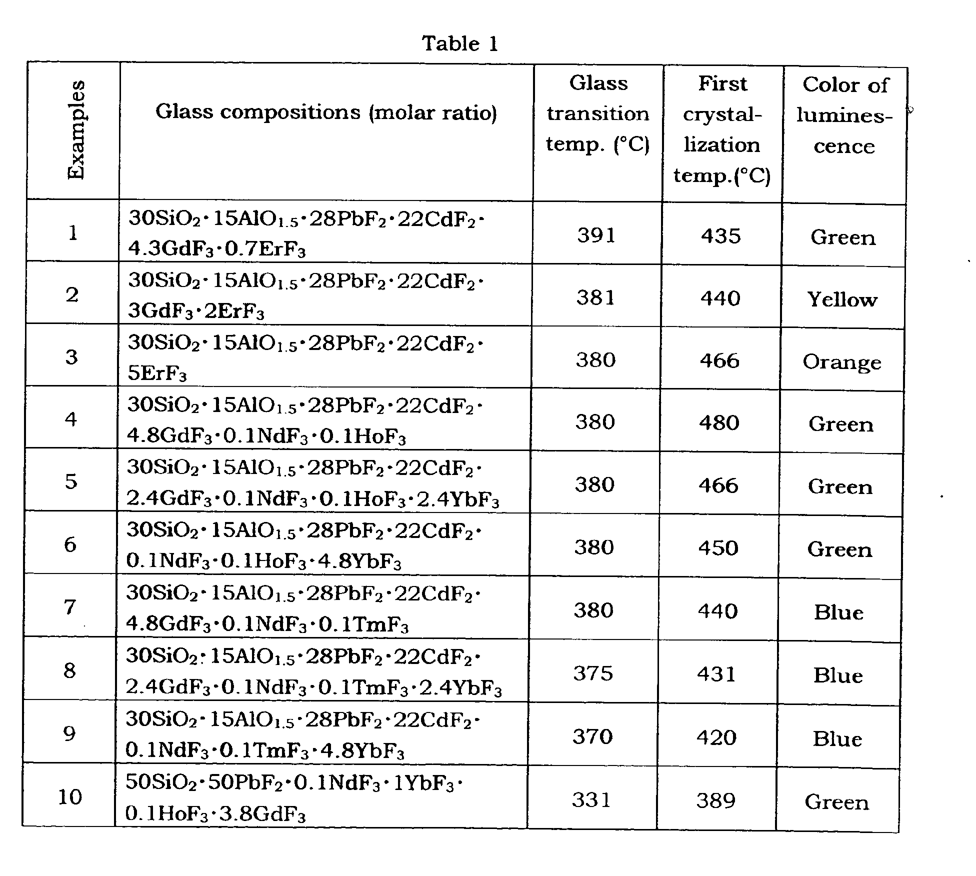

### [Example of formation of patterns and the like]

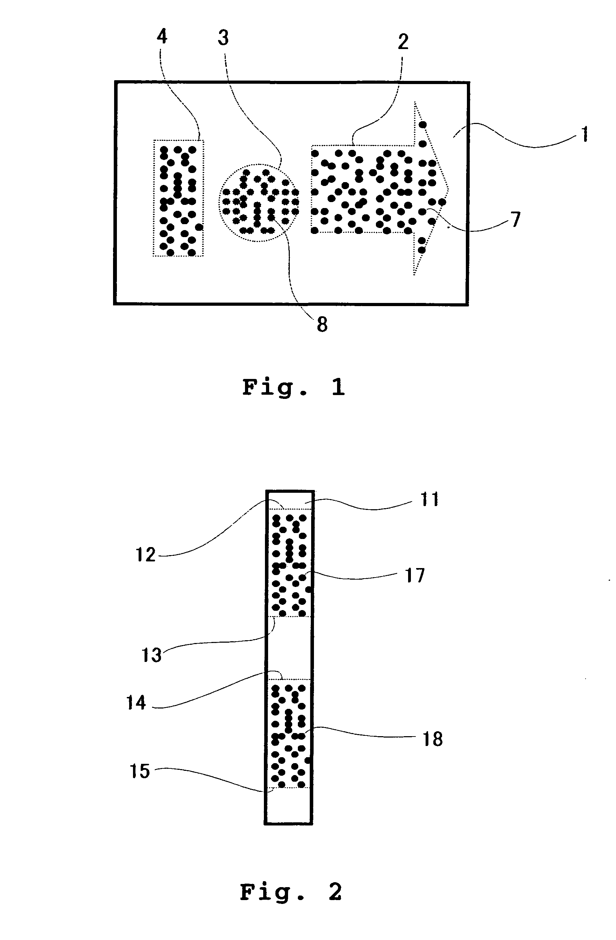

Figures 1-12 shows examples of inscription of patterns and the like using laser light in a glass or a molded object according to the present invention.

In Figure 1, 1 indicates a plate-form glass substrate containing one or more rare-earth elements and one or more halides. Rare-earth element-containing halide crystals formed in the substrate 1 are schematically shown as a number of closed circles represented by 7 and 8. In Figure 1, dotted lines 2, 3 and 4 are the outlines the regions within which the crystals are formed, indicating that the portions within the outlines have been transformed into crystallized glass.

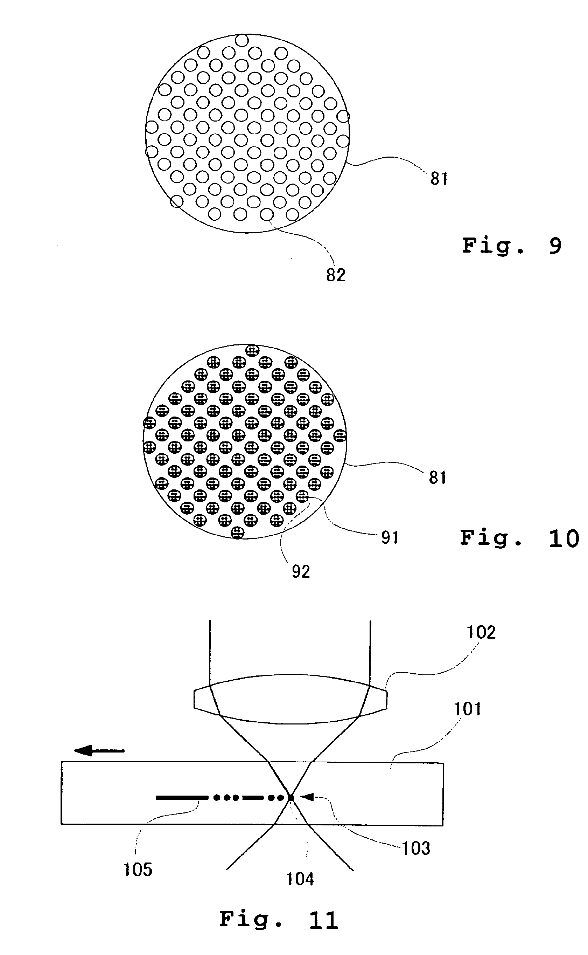

In Figure 2, 11 indicates a portion of a rare-earth element and halide-containing glass substrate in the form of a fiber, and rare-earth element-containing halide crystals formed in the substrate 11 are schematically shown as a number of closed circles represented by 17 and 18. In the figure, 12, 13, 14 and 15 are borderlines of the region within which the crystals are formed and thus the portions between the borderlines 12 and 13, as well as 14 and 15, have been transformed into crystallized glass.

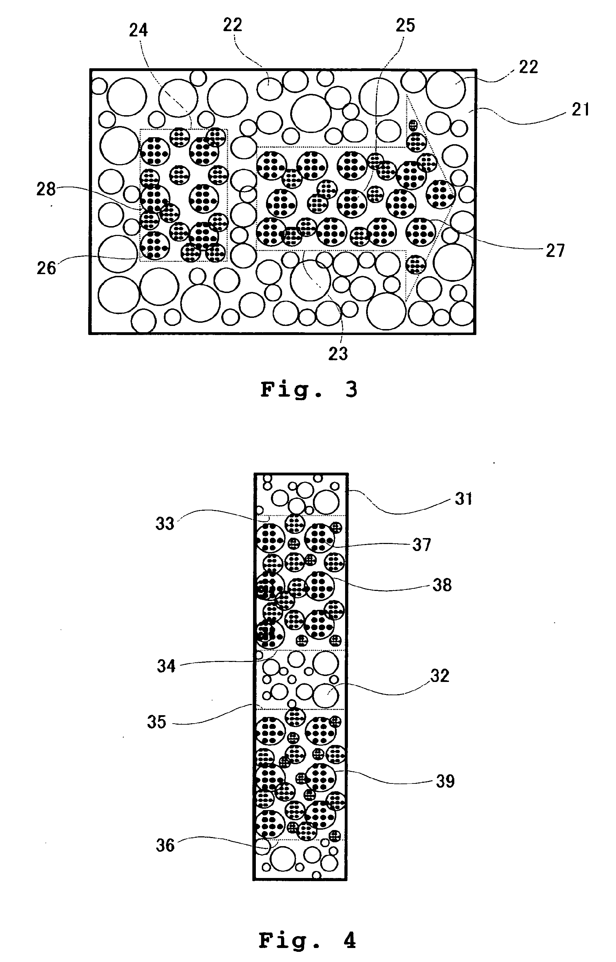

In Figure 3, 21 indicates a molded object in the form of a plate containing dispersed glass particles containing one or more rare-earth elements and one or more halides, and 22 is an enlarged, schematical representation of contained glass particles. In the figure, dotted lines 23 and 24 are the outlines of laser light-irradiated regions, i.e., the portions inside of the outlines are irradiated with laser light. As seen in the figure, by irradiation with laser light, rare-earth element-containing halide crystals (closed circles such as 25, 26) are formed in the glass particles within the regions outlined by dotted lines 23 or 24, thereby transforming the glass particles into crystal glass particles (27, 28, etc.). In general, the particles are far finer than those illustrated in Figure 3, and numerous particles are distributed in such a density that they give clear outlines of the regions within which crystallized glass is created, thereby allowing clear display of the intended figures.

In Figure 4, 31 indicates a portion of a fiber-form molded object containing dispersed glass particles containing one or more rare-earth elements and one or more halides. 32 is an enlarged, schematical view of contained glass particles. In the figure, dotted lines 33, 34, 35 and 36 are border lines of the region irradiated with laser light. Rare-earth element-containing halide crystals are formed (such as closed circle 37, etc.) in the glass particles present between the borderlines 33 and 34, as well as 35 and 36, thereby transforming them into crystallized glass particles (38, 39, etc.).

Figure 5 schematically illustrates a barcode-like pattern, a figure and a letter inscribed in a plate-form substrate 41 made of a glass containing one or more rare-earth elements and one or more halides by creating, at points of irradiation, crystallized glass (46, etc.) by irradiation with laser light directed to arrays of points within the regions shown by the borderlines 43, 44, 45, etc. Clearer outlines of the figures can be given by increasing the density of those dots.

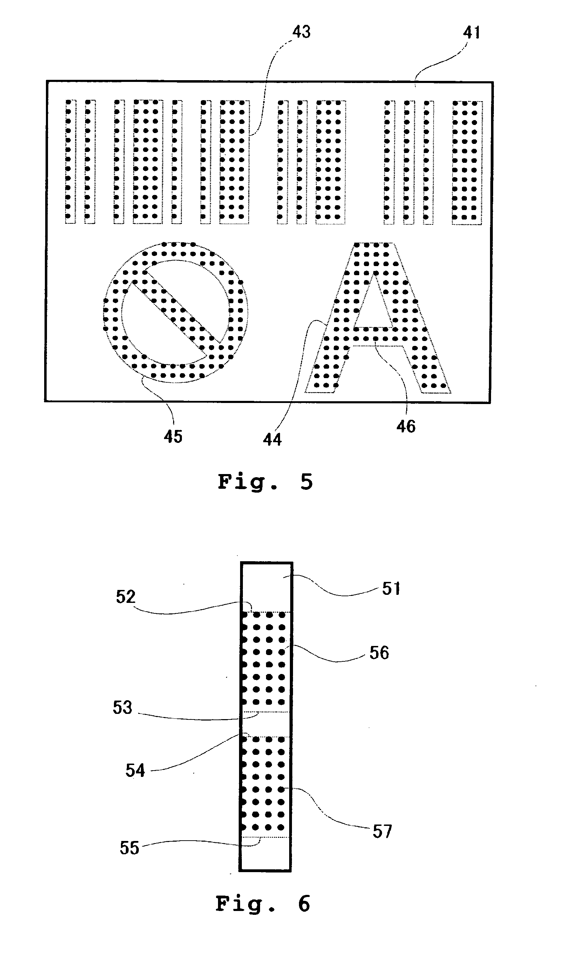

Figure 6 illustrates a pattern inscribed in part of a fiber-form substrate 51 made of glass containing one or more rare-earth elements and one or more halides by creating, at points of irradiation, crystallized glass 56 by irradiation with laser light directed to arrays of points between the borderlines 52 and 53, as well as 54 and 55. Other features than the form of the substrate and the configuration of the pattern are the same as those of the example shown in Figure 5.

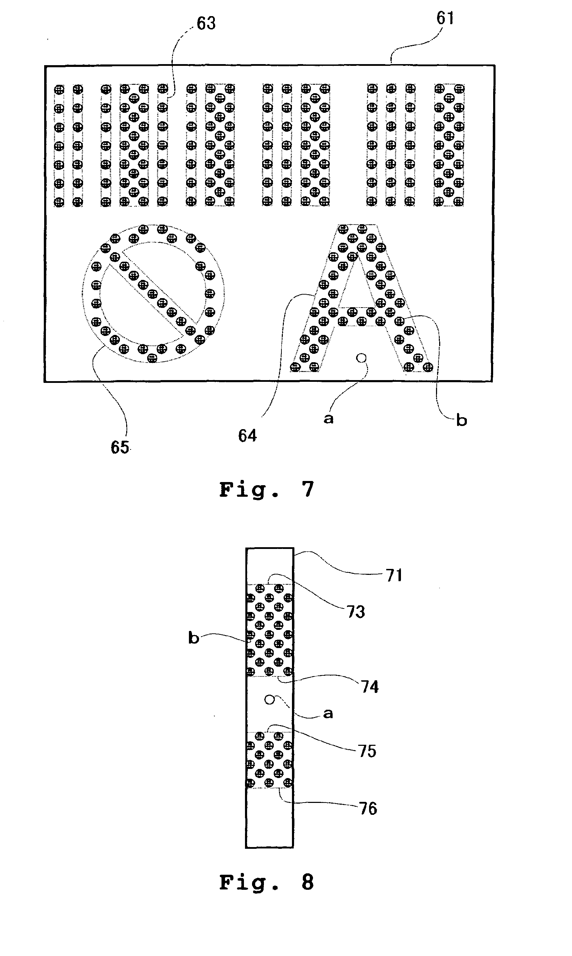

Figure 7 schematically illustrates a molded object 61 in the form of a plate containing dispersed glass particles containing one or more rare-earth elements and one or more halides, in which the same barcode-like pattern, figure and letter as shown in Figure 5 are inscribed by transforming, at points of irradiation, the glass particles into crystallized glass particles comprising rare-earth element-containing halide crystals by irradiating the molded object with laser light directed to arrays of points within the regions shown by the borderlines 63, 64, and 65. Clearer outlines of the figures can be given by increasing the density of those dots.

Figure 8 illustrates a pattern inscribed in a portion of a fiber-form molded object 71 containing dispersed glass particles containing one or more rare-earth elements and one or more halides by transforming, at point of irradiation, the glass particles into crystallized glass particles comprising rare-earth element-containing halide crystals by irradiation with laser light directed to arrays of points between the borderlines 73 and 74, as well as 75 and 76. Other features than the form of the substrate and the configuration of pattern are the same as those of the example shown in Figure 7.

Figure 9 is an enlarged view of part (a) of a molded objects, as shown in Figures 7 and 8, containing dispersed glass particles containing one or more rare-earth elements and one or more halides, in which are illustrated glass particles (82, etc.) dispersed in the continuous phase 81.

Figure 10 is an enlarged view of a point of irradiation (b) as shown in Figures 7 and 8, in which are illustrated crystallized glass particles 92, etc., dispersed in the continuous phase 81, containing rare-earth element-containing halide crystals (closed circles 91, etc.).

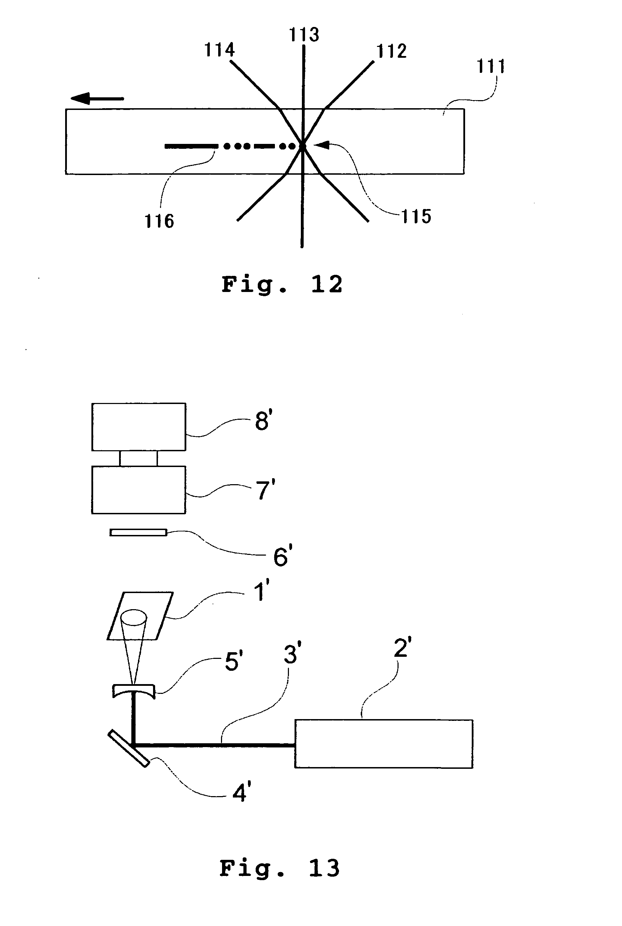

Figures 11 and 12 schematically illustrate some of the methods for creating crystallized glass in an internal region of substrates 101, 111 made of a glass containing one or more rare-earth elements and one or more halides. In Figure 11, laser light (e.g. titanium-sapphire laser light) having a once-expanded width is focused through a lens 102 on an internal point 103 within the glass substrate 101 to create crystallized glass 104 at the point. In Figure 12, three of narrow beams 112, 113 and 114 of laser light (e.g. titanium-sapphire laser light) are directed to an internal point 115 within the glass substrate 111 from above the glass substrate 111 to create crystallized glass at the point at which the beams intersect with each other. In Figures 11 and 12, intended dotes and lines are inscribed consisting of crystallized glass in the internal region of the glass substrates 101, 111 by translating the glass substrates 101, 111 relative to the laser light in the direction indicated by the arrowheads, and also by ON/OFF-modulation of the laser light. Combined with translation of the substrates 101, 111 in the direction perpendicular to the drawing sheet, a plane consisting of crystallized glass may be inscribed in a interior potion of the substrates 101, 111. In addition, by sequentially repeating similar manipulation of the laser light while reducing the depth of the point at which the laser light is focused or converged, crystallized glass can be stacked along the depth within the substrates 101, 111 in a three-dimensional manner.

The invention described with reference to the embodiments illustrated in Examples 1-9 provides glasses and other molded objects that display, with light having a different wavelength from that of the incoming light, figures and designs such as those consisting of dots, lines, planes, two-dimensional figures and/or three-dimensional figures and patterns consisting of repeats or any combinations thereof.

### [Example 10]

According to Table 1, a glass plate (approx. 1 mm thick) was prepared having the composition of 50 SiO₂ - 50 PbF₂ - 0.1 NdF₃ - 1 YbF₃ - 0.1 HoF₃ - 3.8 GdF₃ (molar ratio). The plate was heated at 250 °C and irradiated (300 ms) with carbon dioxide laser light (intensity 0.2 W) having the wavelength of 10.6 µm to form a crystallized region of about 200 µm in diameter on the surface of the glass plate. The crystallized region thus formed had been raised by about 0.3 µm and its position was visually identifiable, though faintly, with unaided eyes due to the fluctuation in reflected light when viewed from an oblique angle, and the region allowed observation of its shape using a differential interference microscope. The refractive index of the glass plate was 1.90 (wavelength 632.8 nm, room temperature).

To provide a coating film by a sol-gel process, a mixture consisting of 1.52 g of tetraethoxysilane (TEOS), 3.34 g of ethanol, 0.26 g of water and 0.026 g of 1 N hydrochloric acid was prepared, and stirred for 1 hour at room temperature to form a solution (A). Separately, to 10.0 g of titanium tetrabutoxide (TBOT) were added 13.3 g of ethanol, 0.53 g of water and 0.11 g of 1 N hydrochloric acid in small portions with stirring, and mixing was continued for 1 hour to form a solution (B). The solution (A) was mixed in small portions with the solution (B) with stirring to form a solution for application (C).

The glass plate mentioned above in which a crystallized region had been created was dipped in the solution for application (C), taken out of and dried, and then heated at 380 °C for 1 hour to form a coating film (0.4 µm thick) on the glass plate. The refractive index of the coating film was 1.92 (wavelength 632.8 nm, room temperature), and the crystallized region on the glass plate had become invisible either with unaided eyes or using a differential interference microscope. Excited by irradiation with titanium-sapphire laser light having the wavelength of 800 nm, green emission of upconversion luminescence could be observed.

### [Example 11]

A glass plate (approx. 1 mm thick) having the composition of 30 SiO₂-15AlO_{1.5} - 28 PbF₂ - 22 CdF₂ - 5 ErF₃ (molar ratio) was heated at 350 °C and irradiated with carbon dioxide laser light having the wavelength of 10.6 µm (intensity 0.3 W) (300 ms) to form a crystallized region of about 200 µm in diameter on the surface of the glass plate. The crystallized region thus formed had been raised by about 0.5 µm and its position was visually identifiable, though faintly, with unaided eyes due to the fluctuation in reflected light viewed from an oblique angle, and the region allowed observation of its shape using a differential interference microscope. The refractive index of the glass plate was 1.77 (wavelength 632.8 nm, room temperature).

On the surface of this glass plate having a crystallized region, an amorphous thin coating film (thickness 3 µm) was provided by high-frequency magnetron sputtering with a 40 SiO₂ - 60 TiO₂ (molar ratio) target, under the conditions of high-frequency power of 50 W, argon gas partial pressure of 0.72 Pa and oxygen gas partial pressure of 0.08 Pa, without heating the plate. The refractive index of the coating film was 1.79 (wavelength 632.8 nm, room temperature), and the crystallized region in the glass plate had become invisible either with unaided eyes or using a differential interference microscope. Excited by irradiation with titanium-sapphire laser light having the wavelength of 800 nm, orange emission of upconversion luminescence could be observed

According to the invention described with reference to the embodiments illustrated in Examples 10-11, a locally crystallized glass is obtained which has such increased ability to conceal figures recorded in itself that even if the surface of the glass substrate, in which crystallized glass is locally created by precipitation of rare-earth element-containing halide crystals, has undergone some deformation, e.g. heaving, caused by the creation of crystallized glass, the deformation is kept invisible, allowing visual identification only when upconversion luminescence is generated by irradiation with excitation laser light.

### [Example 12]

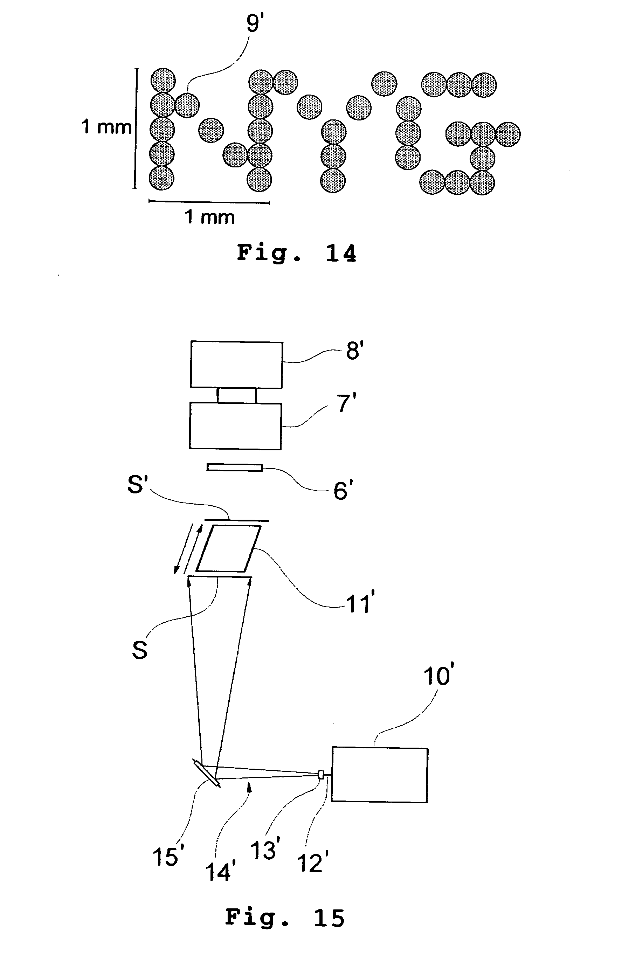

A glass plate (approx. 1 mm thick) having the composition of 30 SiO₂ - 15AlO_{1.5} - 28 PbF₂ - 22 CdF₂ - 5 ErF₃ (mole %) was heated at 350 °C and irradiated with carbon dioxide laser light having the wavelength of 10.6 µm (intensity 0.3 W) to form circular crystallized regions each of which was about 200 µm in diameter, and, by means of the alignment of those circles, three microscopic letters "NYG" (which were substantially colorless and transparent, and the size of each letter was about 1x1 mm) were inscribed. After cooling, as schematically illustrated in Figure 13, this glass plate 1' (shown in a slanted position for convenience of illustration) was irradiated with laser light having the wavelength of 800 nm, at a position where the beam diameter of the laser light 3' (beam diameter 950 µm, intensity 2.3 W) from a titanium-sapphire laser source 2' (3900S mftd. by SPECTRA-PHYSICS) had been expanded up to 1.5 mm through a concave lens 5'. The luminescence from the glass plate 1' was observed from the side opposite to the irradiating laser light, via a filter 6' which cut off light having wavelengths of about 800 nm or over, using a microscope 7' and a CCD camera 8' attached to it. In this manner, each letter inscribed with crystallized regions in the glass plate 1' was detected, as a whole and at a time, as a letter emitting green light by upconversion luminescence. Figure 14 schematically illustrates the array of detected letters "NYG". In Figure 14, 9' is one of the plurality of green light-emitting regions (each having the diameter of 200 µm) arranged to construct the letters, and the bars represent the length of 1 mm.

### [Example 13]

A glass plate (approx. 1 mm thick) having the composition of 30 SiO₂ - 15AlO_{1.5} - 28 PbF₂ - 22 CdF₂ - 5 ErF₃ (mole %) was heated at 350 °C and irradiated with carbon dioxide laser light having the wavelength of 10.6 µm (intensity 0.3 W) to form circular crystallized regions each of which was about 200 µm in diameter, and, by means of the alignment of the circles, three microscopic letters "NYG" (which were substantially colorless and transparent, and the size of each letter was about 1x1 mm) were inscribed. As schematically illustrated in Figure 15, the beam 12' (beam diameter 950 µm) of laser light having the wavelength of 800 nm from a titanium-sapphire laser source 10' (3900S mftd. by SPECTRA-PHYSICS) (intensity 2.3 W) was passed through a low-curvature convex cylindrical lens 13' to expand the width of the beam in a single direction perpendicular to the beam (a direction parallel to the drawing sheet) to provide laser light 14' having a linear cross section, which then was reflected by a galvano mirror 15' employing a aluminum-coated total reflection mirror oscillating about the axis parallel to the drawing sheet to obtain light with oscillating light path in the direction perpendicular to the drawing sheet, with which the glass plate 11' was irradiated at a position where the beam width had been expanded up to 5 mm. S and S' show the positions of the irradiating light when it is at either end of the scanning region. The luminescence from the glass plate was observed from the side opposite to the irradiating laser light, via a filter 6' which cut off light having wavelengths of about 800 nm or over, using a microscope 7' and a CCD camera 8' attached to it. Photographing the glass plate 11' with the CCD camera 8', with exposure time adjusted somewhat longer, allowed to detect the letters, as a whole, which were emitting green-light by upconversion luminescence.

### [Example 14]

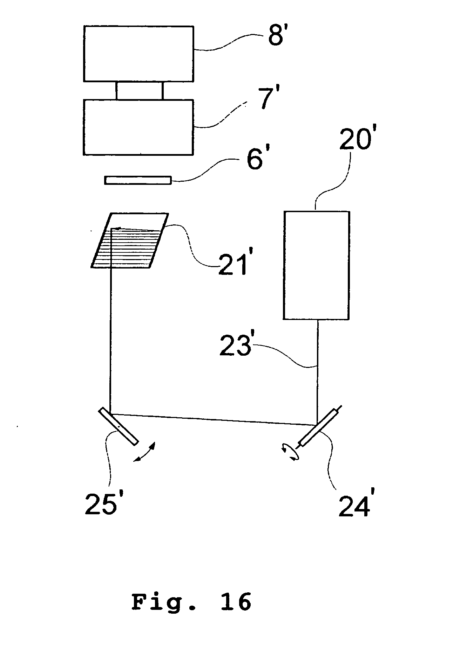

A glass plate (approx. 1 mm thick) having the composition of 30 SiO₂ - 15AlO_{1.5} - 28 PbF₂ - 22 CdF₂ - 5 ErF₃ (mole %) was heated at 350 °C and irradiated with carbon dioxide laser light having the wavelength of 10.6 µm (intensity 0.3 W) to form circular crystallized regions each of which was about 200 µm in diameter, and, by means of the alignment of the circles, three microscopic letters "NYG" (which were substantially colorless and transparent, and the size of each letter was about 1x1 mm) were inscribed. As schematically illustrated in Figure 16, the laser light 23' (beam diameter 500 µm, intensity 0.5 W) having the wavelength of 800 nm from a semiconductor laser source 20' (AlGaAs diode laser SLD303XT-202, mftd. by SONY) was reflected by 2 galvano mirrors. The first galvano mirror 24' was oscillated slowly about the axis placed parallel to the drawing sheet, and the second galvano mirror 25' was oscillated rapidly about the axis placed perpendicular to the drawing sheet. By letting the semiconductor laser light be reflected by these mirrors, the light path was oscillated slowly in the direction perpendicular to the drawing sheet by the first galvano mirror 24', and, simultaneously, rapidly in the direction parallel to the drawing sheet by the second galvano mirror 25'. The glass plate 21' was scanned with the laser light, and luminescence from the glass plate was continuously photographed and recorded, via a filter 6' which cut off light having wavelengths of approx. 800 nm or over, from the opposite side of the glass plate using a microscope 7' and a CCD camera 8' attached to it. After a computer processing made to superimpose thus obtained images with each other, the letters were detected as a whole which were emitting green-light by upconversion luminescence.

### [Example 15]

A glass plate (approx. 1 mm thick) having the composition of 30 SiO₂ - 15AlO_{1.5} - 28 PbF₂ - 22 CdF₂ - 5 ErF₃ (mole %) was heated at 350 °C and irradiated with titanium-sapphire laser light (intensity 0.3 W) (3900S, mftd. by SPECTRA-PHYSICS) to form circular crystallized regions each of which was about 200 µm in diameter, and, by means of the alignment of the circles, three microscopic letters "NYG" (which were substantially colorless and transparent, and the size of each letter was about 1x1 mm) were inscribed. After cooling, the glass plate was irradiated with laser light having the wavelength of 800 nm, at a position where the beam diameter of the laser light (beam diameter 950 µm, intensity 2.3 W) from a titanium-sapphire laser source (3900S mftd. by SPECTRA-PHYSICS) had been expanded up to 1.5 mm through a concave lens. The luminescence from the glass plate was observed from the side opposite to the irradiating laser light, via a filter which cut off light having wavelengths of approx. 800 nm or over, using a microscope and a CCD camera attached to it. In this manner, the each letter inscribed with crystallized regions in the glass plate was detected, as a whole and at a time, as a letter emitting green light by upconversion luminescence. The site emitting green light by upconversion luminescence could also be detected when the detection system was repositioned to perform observation from one of the edge sides (mirror polished) of the glass plate, along its thickness.

In a glass or other object carrying letters or figures, such as dots, lines, planes, three-dimensional figures, patterns or the like, which have been inscribed by locally creating crystallized glass comprising precipitated rare-earth element-containing halide crystals, it is possible, according to the invention described above with reference to the embodiments illustrated in Examples 12-15, to detect those inscribed letters or figures, within a broad range at a time, by upconversion luminescence generated by irradiation with laser light.

## Claims

1. A method for creating, in a glass substrate, crystallized glass comprising precipitated rare-earth element-containing halide crystals, wherein the method comprises irradiating with laser light a glass substrate containing one or more rare-earth elements and one or more halides.

2. A method for creating, in a glass substrate, crystallized glass comprising precipitated rare-earth element-containing halide crystals, wherein the method comprises heating a glass substrate containing one or more rare-earth elements and one or more halides at a temperature that is lower than the first crystallization temperature of the glass substrate, and irradiating the glass substrate with laser light.

3. The method according to claim 1 or 2, wherein irradiation with laser light is performed at one or more regions defined as dots, lines, planes and/or three-dimensional figures in the glass substrate to create crystallized glass in the regions.

4. The method according to one of claims 1 to 3, wherein the laser light is carbon dioxide laser light, titanium-sapphire laser light, YAG laser light, argon laser light, semiconductor laser light or dye laser light.

5. A glass prepared according to claim 3 or 4, wherein crystallized glass comprising precipitated rare-earth element-containing halide crystals is created in one or more regions defined as dots, lines, planes and/or three-dimensional figures in the glass substrate.

6. A glass containing one or more rare-earth elements and one or more halides, wherein crystallized glass comprising precipitated rare-earth element-containing halide crystals is created, in the glass substrate, in one or more regions defined as dots, lines, planes and/or three-dimensional figures.

7. A method for creating, in a molded object, particles comprising crystallized glass comprising precipitated rare-earth element-containing halide crystals, by irradiating with laser light the molded object which contains dispersed glass particles containing one or more rare-earth elements and one or more halide.

8. The method according to claim 7, wherein the molded object is irradiated with the laser light in one or more regions thereof defined as dots, lines, planes and/or three-dimensional figures to create the particles comprising crystallized glass in the regions.

9. The method according to claims 7 or 8, wherein the laser light is carbon dioxide laser light, titanium-sapphire laser light, YAG laser light, argon laser light, semiconductor laser light or dye laser light.

10. The method according to one of claims 7 to 9, wherein the molded object comprises as the continuous phase thereof at least one material selected from the group consisting of organic polymer, inorganic polymer, glass and a composite thereof,

11. A molded object prepared according to the method of claim 8 or 9, wherein glass particles comprising crystallized glass comprising precipitated rare-earth element-containing halide crystals are created in the molded object in one or more regions thereof defined as dots, lines, planes and/or three-dimensional figures.

12. A molded object containing dispersed glass particles containing one or more rare-earth elements and one or more halides, wherein crystallized glass comprising precipitated rare-earth element-containing halide crystals is created in the glass particles present in one or more regions thereof defined as dots, lines, planes and/or three-dimensional figures in the molded object.

13. A coated, locally crystallized glass comprising; a glass substrate containing one or more rare-earth elements and one or more halides and including, on or beneath the surface thereof, locally created crystallized glass comprising precipitated rare-earth element-containing halides; and a coating film covering the surface of the glass substrate, which coating film has a refractive index whose modulus difference is not more than 0.5 from the refractive index of the glass substrate with light having the wavelength of 632.8 nm.

14. A coated, locally crystallized glass, comprising; a glass substrate containing one or more rare-earth elements and one or more halides and including, on or beneath its surface, locally created crystallized glass comprising precipitated rare-earth element-containing halide crystals; a coating layer covering the surface of the glass substrate, which coating layer has a refractive index whose modulus difference is not more than 0.5 from the refractive index of the glass substrate with light having the wavelength of 632.8 nm; and a transparent plate covering and tightly adhered to the coating layer.

15. A method for producing a coated, locally crystallized glass, comprising coating the surface of a glass substrate containing one or more rare-earth elements and one or more halides and including, on or beneath its surface, locally created crystallized glass comprising precipitated rare-earth element-containing halides, with a coating film of a material having a refractive index whose modulus difference is not more than 0.5 from the refractive index of the glass substrate with light having the wavelength of 632.8 nm.

16. A method for producing a coated, locally crystallized glass, comprising covering the surface of a glass substrate containing one or more rare-earth elements and one or more halides and including, on or beneath its surface, locally created crystallized glass comprising precipitated rare-earth element-containing halides, with a coating layer of a material having a refractive index whose modulus difference is not more than 0.5 from the refractive index of the glass substrate with light having the wavelength of 632.8 nm and a transparent plate over the coating layer.

17. A method for identification of a region containing precipitated rare-earth element-containing halide crystals within a glass substrate comprising glass containing one or more rare-earth elements and one or more halides and including locally precipitated rare-earth element-containing halide crystals, or within a molded object comprising dispersed glass particles which contain one or more rare-earth elements and one or more halides and in some of which particles, locally within the molded object, rare-earth element-containing halide crystals are precipitated, wherein the method comprises irradiating the glass substrate or the molded object with excitation laser light to generate upconversion luminescence in the rare-earth element-containing halide crystals.

18. The method according to claim 17, comprising expanding the beam width of the excitation laser light, and irradiating the glass substrate or molded object with the laser light.

19. The method according to claim 17, comprising irradiating the glass substrate or molded object with excitation laser light having a linear cross section by scanning the glass substrate or molded object with the laser light in a perpendicular or oblique direction relative to the longitudinal direction of the cross section.

20. The method according to claim 17, comprising irradiating the glass substrate or molded object with excitation laser light having a dot-like cross section by scanning the glass substrate or molded object with the laser light in a first direction and simultaneously also in another direction perpendicular or oblique relative to the first direction.
